# EUROPÄISCHE PATENTSCHRIFT

(11) **EP 0 305 660 B1**
(45) Veröffentlichungstag und Bekanntmachung des Hinweises auf die Patenterteilung: **05.01.1994**
(21) Anmeldenummer: 88108879.3
(22) Anmeldetag: 03.06.1988
(51) Int. Cl.: B29C 47/06

(54) **Verfahren zum Herstellen von Laminaten im Koextrusionsverfahren und nach diesem Verfahren hergestellte Laminate**
Method for manufacturing a laminate by co-extrusion, and laminate
Procédé de fabrication d'un produit stratifié par coextrusion et produit stratifié ainsi obtenu

(30) Priorität: 04.09.1987 DE 3729571; 26.10.1987 DE 3736164
(43) Veröffentlichungstag der Anmeldung: 08.03.1989
(73) Patentinhaber: KAUTEX WERKE REINOLD HAGEN AG, D-53229 Bonn (DE)
(72) Erfinder: Thomas, Alfred, D-5202 Hennef-Dambroich (DE)
(74) Vertreter: Koepsell, Helmut, Dipl.-Ing.

(56) Entgegenhaltungen:
- EP-A- 0 065 619
- EP-A- 0 158 573
- FR-A- 2 390 344
- GB-A- 1 191 476
- US-A- 3 577 885
- US-A- 3 675 015
- US-A- 4 477 521
- US-A- 4 676 936
- PLASTVERARBEITER, Band 36, Nr. 3, März 1985, Seiten 12-23, Speyer, DE; M. WACHSMANN: "Mehrschichtig heisst vielseitig"

## Beschreibung

Die Erfindung betrifft ein Verfahren gemäß dem Oberbegriff von Anspruch 1.

Im Koextrusions-Verfahren hergestellte Laminate, die zumindest überwiegend aus thermoplastischem Kunststoff bestehen, weisen zumindest in Teilbereichen ihrer Erstreckung im allgemeinen wenigsten drei Schichten auf, von denen wenigstens eine als tragende Schicht dienende Schicht aus thermoplastischem Kunststoff besteht und wenigstens eine andere Schicht aus einem Material besteht, das der Haftvermittlung zwischen dieser Tragschicht und wenigstens einer weiteren Schicht dient, die aus einem Material besteht, das Eigenschaften aufweist, die sich von denen des die Tragschicht bildenden Materials unterscheiden. Derart beschaffene Laminate bzw. die daraus hergestellten Endprodukte werden überwiegend für Verpackungszwecke verwendet, bei denen die Eigenschaften gebräuchlicher Kunststoffe, insbesondere der Polyolefine, nicht allen Anforderungen genügen. Ein typisches Beispiel ist die Permeabilität der Polyolefine für das zu verpackende Gut und/oder umgebendes Medium. So kann die Permeabilität dieser Materialien ihre Verwendung als Folie, Liner, Behälter, z. B. als Flasche, Kanister, Faß, Kraftstofftank beschränken oder beeinträchtigen. Bei der Verwendung von Folien für die Verpackung von Lebensmitteln kann es z. B. darauf ankommen, die Verpackungsfolien für Fette, Geruchsstoffe und dgl. undurchlässig zu machen, damit diese Substanzen, die Bestandteil des zu verpackenden Gutes sind, nicht nach außen durch die Folie hindurchdiffundieren. Wenn die Folien für diese und ggf. andere Substanzen permeabel wären, würde sich im Laufe der Zeit die Qualität des verpackten Gutes nachteilig verändern. Bei Flaschen oder ähnlichen Behältern kann es beispielsweise darum gehen, daß bei giftigem Füllgut oder solchem mit gefährlichen Bestandteilen, beispielsweise Pflanzenschutzmitteln, ein Hindurchdiffundieren der Füllguts bzw. derartiger Bestandteile aus Sicherheitsgründen ausgeschlossen sein muß. Dies wird für eine große Anzahl von Chemikalien gelten, die in Flaschen, aber auch Kanistern, Fässer oder dgl. verpackt werden. Bei Kraftstofftanks soll im allgemeinen verhindert werden, daß die Wandungen derselben für Kohlenwasserstoffe permeabel sind. In vielen Fällen kann aber auch das Problem darin bestehen, das Eindringen von Substanzen aus der umgebenden Atmosphäre durch die Wandung der Folie, Flasche oder dgl. in das Innere der Verpackung hinein zu vermeiden. Als typisches Beispiel hierfür sei die in vielen Fällen erhobene Forderung erwähnt, das Hindurchdiffundieren des Luftsauerstoffes durch die Wandung der Folie, des Behälters oder dgl. in das Innere desselben hinein auszuschließen.

Es sind zwar Kunststoffe bekannt, deren Permeabilität beispielsweise für Benzin und/oder organische Lösungsmittel so gering ist, daß sie die zulässigen Werte nicht überschreiten. Diese Kunststoffe sind jedoch teuer und/oder nicht ohne weiteres verarbeitbar. In vielen Fällen weisen sie auch nicht die mechanischen Eigenschaften der Polyolefine auf, die letztere hinsichtlich Festigkeit, Zähigkeit, elastischer Verformbarkeit usw. gerade für Füllgüter geeignet machen, deren Transport, Aufbewahrung und dgl. gewisse Vorkehrungen erfordern.

Aus den vorstehend beschriebenene Gründen werden Folien, Behälter wie z. B. Kraftstofftanks, oft mehrschichtig in der Weise hergestellt, daß mindestens eine zumeist aus Polyolefin bestehende Tragschicht mit einer für das Füllgut und/oder das umgebende Medium mehr oder weniger undurchlässigen Sperrschicht versehen wird, die zum Beispiel aus Polyamid bestehen kann und deren Dicke im allgemeinen wesentlich geringer ist als die der Tragschicht(en). Diese Sperrschicht kann innenseitig und/oder außenseitig aufgebracht sein. Es ist aber auch möglich, die Sperrschicht zum Beispiel zwischen zwei Tragschichten, also im mittleren Bereich des Querschnitts der Wandung, anzuordnen. Da es im allgemeinen aufgrund der unterschiedlichen Eigenschaften des Tragschicht-Materials einerseits und des Sperrschicht-Materials andererseits nicht möglich ist, diese unmittelbar so miteinander zu verbinden, daß die Verbindung ausreichend fest ist, wird zwischen Tragschicht und Sperrschicht jeweils eine zusätzliche Schicht aus einem anderen Material angeordnet, dem überwiegend oder ausschließlich die Aufgabe zukommt, als Haftvermittler zwischen Tragschicht und Sperrschicht zu dienen. Diese Haftvermittler-Schicht muß somit aus einem Material bestehen, welches sowohl mit dem die Tragschicht bildenden Material als auch mit dem die Sperrschicht bildenden Material eine ausreichend feste Verbindung eingeht. Wenngleich die Haftvermittelerschicht nur eine Hilfsfunktion im Sinne der Herstellung einer Verbindung zwischen Tragschicht und Sperrschicht hat, kommt ihr doch für die mechanische Festigkeit des Endproduktes eine entscheidende Bedeutung zu, da eine unvollständige Ausbildung der Haftvermittlerschicht, beispielsweise das Fehlen derselben in bestimmten Bereichen des Laminats, zwangsläufig die mechanische Festigkeit des Endproduktes beeinträchtigt, da es in diesen Bereichen zu keiner oder nur zu einer unvollkommene Verbindung zwischen Tragschicht und Sperrschicht kommt.

Sowohl die Sperrschicht(en) als auch die Haftvermittlerschicht(en) weisen im allgemeinen eine geringe Dicke auf. Dies gilt insbesondere für die Haftvermittlerschicht(en), deren Dicke gegebenenfalls im Zehntelmillimeter-Bereich oder merklich darunter liegen kann. Es ist deshalb nicht unter allen in der Praxis vorkommenden betrieblichen Bedingungen gewährleistet, daß diese Schichten in der Wandung der Folie oder des Hohlkörpers gleichmäßig verteilt überall dort angeordnet sind, wo ihr Vorhandensein erforderlich ist. Da aus Gründen der Wirtschaftlichkeit anzustreben ist, die Wandung des Artikels und damit auch die einzelnen ihn bildenden Schichten nicht dicker zu machen als unbedingt erforderlich, sind der Dicke der einzelnen Schichten nach oben Grenzen gesetzt. Mithin kann die Möglichkeit nicht völlig ausgeschlossen werden, daß beim Aufweiten der Folie oder des Vorformlings wenigstens eine der Schichten eine Überbeanspruchung erfährt, die dazu führt, daß diese Schicht am Endprodukt in bestimmten Bereichen so unvollkommen ausgebildet ist, daß sie die ihr zugedachte Funktion nicht erfüllen kann.

Hinzu kommt, daß auch bei der Bildung der Folie oder des Vorformlings, aus welchem der Hohlkörper hergestellt wird, gegebenenfalls sogar bei der Bildung der einzelnen Schichten im Extrusionskopf, Unregelmäßigkeiten auftreten können, die visuell nicht wahrnehmbar sind, zumal es sich bei den hier in Rede stehenden Folien und Hohlkörpern immer um solche handelt, die in großen Mengen hergestellt werden. Für die Herstellung der Folie oder des Vorformlings wird eine verhältnismäßig komplizierte Vorrichtung benutzt, die aus mehreren Extrudern zum Plastifizieren der Materialien für die einzelnen Schichten und einem gemeinsamen Extrusionskopf besteht, in welchen hinein die in den einzelnen Extrudern plastifizierten Materialien geführt werden, um in diesem Kopf zusammengeführt und in die Querschnittsform der Folie oder des Vorformlings gebracht zu werden. Auch hierbei kann die Möglichkeit nicht vollständig ausgeschlossen werden, daß, wenn auch nur in Ausnahmefällen, Unregelmäßigkeiten in der einen oder anderen Schicht auftreten, die, insbesondere bei den von vornherein dünneren Schichten, gegebenenfalls dazu führen können, daß in einem bestimmten Bereich der Folie oder des Vorformlings eine Schicht unvollständig ausgebildet ist oder gegebenenfalls sogar ganz fehlt.

Dem fertigen Erzeugnis sind derartige Fehler oder Fehlstellen im allgemeinen nicht anzusehen, es sei denn, daß sie sich in der Außenschicht befinden. Dies ist aber im Normalfall einigermaßen unwahrscheinlich, da die äußere Schicht(en) einer Folie oder eines Hohlkörpers meist die Tragschicht oder eine der Tragschichten ist bzw. sind, die ohnehin dicker ausgeführt ist beziehungsweise sind, so daß das Auftreten von Fehlern in diesen Schichten viel weniger wahrscheinlich ist als bei den anderen, zum Teil erheblich dünneren Schichten. Diese werden sich jedoch überwiegend im Inneren der Wandung, also zwischen zwei anderen Schichten befinden, so daß sie von außen überhaupt nicht zugänglich sind. Dies gilt in jedem Fall für die Haftvermittlerschicht(en), da deren Funktion lediglich darin besteht, zwei andere Schichten miteinander zu verbinden, so daß eine Haftvermittlerschicht zwangsläufig immer zwischen zwei anderen Schichten angeordnet und somit durch diese beidseitig abgedeckt ist. Aber auch die Sperrschicht, die die Undurchlässigkeit der Wandung des Hohlkörpers bewirken soll, ist in vielen Fällen zwischen zwei anderen Schichten, zumeist zwei Haftvermittlerschichten, angeordnet und somit ebenfalls abgedeckt und nicht von außen zugänglich. Aber auch dann, wenn die Sperrschicht eine der äußeren Schichten der Wandung eines Hohlkörpers darstellt, ist eine visuelle Kontrolle kaum möglich, da die Sperrschicht bei einer solchen Anordnung zumeist die den Innenraum des Hohlkörpers begrenzende Schicht bildet und somit nicht ohne weiteres zugänglich ist. Hinzu kommt, daß eine ausschließlich visuelle Kontrolle ohne zusätzliche Hilfsmittel zum Sichtbarmachen irgendwelcher Fehlstellen ohnehin außerordentlich schwierig ist. Jedenfalls müßte selbst bei äußerer Anordnung eine visuelle Kontrolle mit außerordentlicher Sorgfalt durchgeführt werden, um Fehlstellen zu erkennen. Dies gilt auch dann, wenn bei im vorstehenden Sinne innerer Anordnung der Sperrschicht der Hohlkörper zwecks Durchführung von Stichproben aufgeschnitten würde.

Es war bereits erwähnt worden, daß eine einwandfreie Beschaffenheit des Laminats als Folie oder als Behälter insbesondere bei empfindlichen und/oder gefährlichen Verpackungsgütern auch im Hinblick auf die mechanische Festigkeit von entscheidender Bedeutung sein kann, nicht zuletzt auch unter dem Aspekt der Produzentenhaftung. Zweifellos ist es nachteilig, daß im Koextrusions-Verfahren gefertigte mehrschichtige Folien und Behälter visuell oder in anderer Weise bisher nur in sehr unvollkommener Weise auf ihre einwandfreie Beschaffenheit hin kontrolliert werden konnten.

EP-A-0,065,619 offenbart ein Verfahren, bei welchem die äußeren Schichten eines Kunststoffprofils einen fluoreszierenden Farbstoff enthalten, der durch Strahlung sichtbar gemacht wird.

Dieses Verfahren ermöglicht, während der Herstellung des Profils die Dicke der mit dem fluoreszierenden Farbstoff versehenen Schicht zu regeln
Dabei wird so vorgangen, daß unterhalb der Austrittsöffnung des Koextrusions-Kopfes ein Strahler derart angeordnet ist, daß das Profil sofort nach dem Austritt aus dem Kopf dieser Strahlung ausgesetzt wird. Auf diese Weise wird festgestellt, ob die mit der fluoreszierenden Substanz versehene Schicht die gewünschte Dicke aufweist. Falls die Ist-Dicke von der Soll-Dicke abweicht, wird der Materialfluß im Kopf in entsprechender Weise beeinflußt.

Demzufolge liegt der Erfindung die Aufgabe zugrunde, das einleitend beschriebene Verfahren so abzuwandeln und die unter Anwendung dieses Verfahrens gefertigten Folien und Hohlkörper so auszubilden, daß auf verhältnismäßig einfache Weise eine Kontrolle des fertigen Erzeugnisses möglich ist, und zwar zumindest in Form von Stichproben, gegebenenfalls aber auch in Form einer laufenden Prüfung, bei welcher die Folien bzw. Hohlkörper nicht zerstört zu werden brauchen.

Diese Aufgabe wird durch die Merkmale des Anspruches 1 gelöst.

Als besonders zweckmäßig hat sich eine Verfahrensweise herausgestellt, bei welcher dem Material für wenigstens eine der wichtigen Schichten des Vorformlings und des daraus herzustellenden Hohlkörpers eine lumineszierende, fluoreszierende oder phosphoreszierende Substanz zugegeben wird, die es erlaubt, an den fertigen Erzeugnissen die aus diesem Material jeweils gebildete Schicht unter der Einwirkung von geeigneten Strahlen, zum Beispiel UV-Strahlen, Röntgenstrahlen, Elektronenstrahlen, Infrarotstrahlen usw. erkennbar, z. B. sichtbar zu machen. Es ist dann ohne weiteres möglich, visuell oder in anderer Weise zu prüfen, ob die so erkennbar gemachte Schicht überall dort, wo sie vorhanden sein soll, auch tatsächlich vorhanden ist. Es besteht auch die Möglichkeit, den Materialien für zwei oder mehr Schichten lumineszierende, fluoreszierende oder phosphoreszierende Substanzen unterschiedlicher Beschaffenheit zuzugeben, wobei vorteilhaft die Substanzen so auszuwählen sind, daß sie unterschiedliche Schichten, gegebenenfalls auch bei gleicher Wellenlänge der einfallenden Strahlen, in unterschiedlichen Farben erscheinen lassen. Auf diese Weise besteht die Möglichkeit, mehr als eine Schicht eines Laminats zu kontrollieren, ohne dieses zerstören oder sonstwie bezüglich seiner Beschaffenheit beeinträchtigen zu müssen. Die lumineszierenden, fluoreszierenden oder phosphoreszierenden Substanzen können in Form sogenannter Leuchtpigmente dem Kunststoff der jeweiligen Schicht beigemischt werden. Es ist beispielsweise möglich, die Leuchtpigmente dem Kunststoffgranulat beizumischen, bevor dieses in den Extruder gegeben wird. Die Fluoreszenzfarbe kann durch die chemische Zusammensetzung des Leuchtstoffes bestimmt werden. So ist es ohne Schwierigkeiten möglich, durch geeignete Auswahl der Leuchtpigmente mehrere Schichten im Laminat durch geeignete Bestrahlung erkennbar zu machen. Von besonderer Bedeutung ist dabei, daß die Menge der dem Kunststoff beizugebenden Leuchtpigmente sehr klein sein, beispielsweise in der Größenordnung von 0,001% liegen kann, um den angestrebten Effekt zu erreichen.

Die vorstehend beschriebene Ausführung ist beschränkt auf solche Laminate, die aus durchsichtigem oder durchscheinendem Material bestehen. Wenn die Außenschicht(en) der Wandung oder gegebenenfalls auch die zu prüfende Schicht so eingefärbt ist bzw. sind, daß die Leuchtpigmente nicht mehr erkennbar sind, wird die vorbeschriebene Prüfung nicht möglich sein. Trotzdem kann das Verfahren gemäß der Erfindung, wenn auch in weniger vollkommener Form, angewendet werden, beispielsweise derart, daß zunächst Muster eines bestimmten herzustellenden Laminats, z. B. einer Folie oder eines Hohlkörpers, unter Verwendung von Materialien, die nicht eingefärbt sind, gefertigt werden und anhand dieser Muster die Zusammensetzung und der Aufbau der Wandung einer derartigen Folie oder eines derartigen Hohlkörpers optimiert wird, worauf dann anhand der an den Mustern gewonnenen Erfahrungen und Erkenntnisse die Serienproduktion der gefärbten Erzeugnisse aufgenommen werden kann.

Das Erkennen der jeweiligen Schicht kann durch Betrachtung mit dem menschlichen Auge, aber auch unter Verwendung von geeigneten physikalischen Mitteln erfolgen, deren Wirkungsbereich außerhalb des Wahrnehmungsbereichs des menschlichen Auges liegt.

Entsprechendes gilt auch für eine Abwandlung der Erfindung, bei welcher dem Material wenigstens einer der Schichten des Laminats eine Substanz beigefügt wird, die, wenn sie in Kontakt mit einer anderen, entsprechend ausgewählten Substanz kommt, zu einer ggf. reversierbaren Veränderung, beispielsweise einem Farbumschlag der die Substanz enthaltenden Schicht führt. Diese Ausführung ist insbesondere vorteilhaft für die Durchführung von Stichproben insbesondere an Behältern und anderen Hohlkörpern, deren beide äußere Schichten auf einwandfreie Beschaffenheit, insbesondere Vollständigkeit zu prüfen sind. Beispielsweise könnte der Behälter mit einer die Änderung der Schicht bewirkenden Substanz enthaltenden Flüssigkeit ausgespült werden, wenn die zu prüfende Schicht der Wandung innen angeordnet ist, also den Innenraum des Behälters begrenzt und mit dem innerhalb des Behälters befindlichen Füllgut in Berührung kommt. Allerdings wird diese Variante der Erfindung auf Durchführug von Stichproben oder auf die Optimierung eines bestimmten Behälters bei der Vorbereitung der Herstellung desselben anhand von Mustern beschränkt bleiben.

In der Zeichnung ist als Ausführungsbeispiel der Erfindung ein Hohlkörper im Schema dargestellt. Es zeigen:
Fig. 1 die Ansicht einer im Koextrusions-Blasverfahren hergestellten Flasche mit einer mehrschichtigen Wandung,
Fig. 2 den Bereich II der Wandung in Fig. 1 in größerem Maßstab und im Längsschnitt.

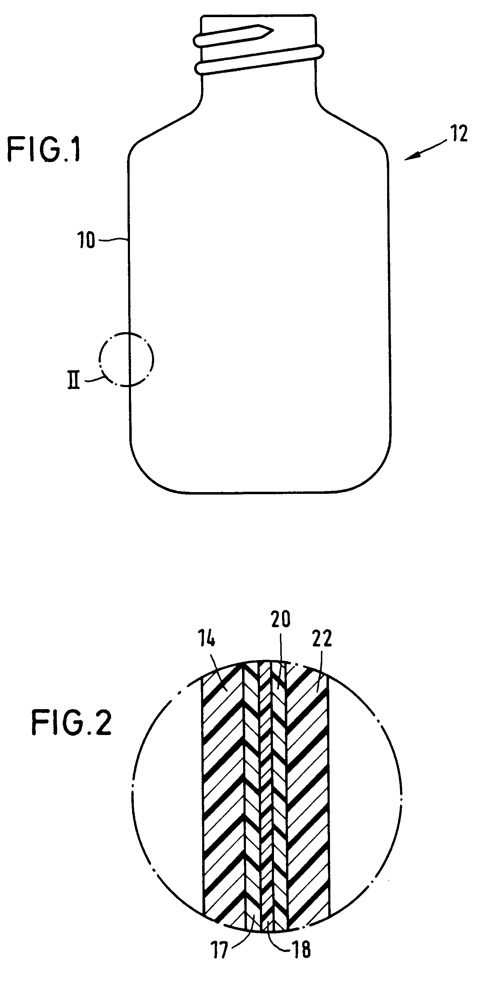

Die Wandung 10 der Flasche 12 ist gemäß der Darstellung der Figur 2 aus fünf Schichten aufgebaut, von denen die außen befindliche Schicht 14 und die innen befindliche Schicht 22 im wesentlichen die erforderliche mechanische Festigkeit der Flasche 12 bewirken. Die beiden Schichten 14 und 22 können beispielsweise aus einem Polyolefinmaterial bestehen.

Die Schicht 18 besteht aus einem Material, welches eine Barriere-Wirkung derart hat, daß es ein Diffundieren von Teilen des Füllgutes durch die Wand hindurch verhindert. Bei entsprechender Materialauswahl für diese Sperrschicht 18 kann auch ein Diffundieren beispielsweise des Luftsauerstoffes von außen durch die Wandung in das Innere der Flasche hinein verhindert werden.

Das die Sperrschicht 18 bildende Material geht normalerweise keine haltbare Verbindung mit den Materialien ein, die die Schichten 14 und 22 bilden. Deshalb ist es erforderlich, zu beiden Seiten der Sperrschicht 18 jeweils eine Schicht 17 bzw. 20 aus einem Material anzuordnen, das als Haftvermittler dient, also sowohl mit den die Schicht 14 bzw. 22 bildenden Materialien als auch mit dem die Sperrschicht 18 bildenden Material eine ausreichend feste Verbindung eingeht. Für die Verwendbarkeit der Flasche 12 zum Verpacken beispielsweise von agressiven oder stark flüchtigen Bestandteile enthaltenden Füllgütern ist somit das Vorhandensein der Sperrschicht 18 in allen dafür vorgesehenen Bereichen der Flasche 12 von entscheidender Bedeutung.

Bei Anwendung der Lehre gemäß der Erfindung würde z. B. so verfahren werden können, daß dem die Sperrschicht 18 bildenden Material eine fluoreszierende, lumineszierendeoder phosphoreszierende Substanz beigemischt wird, die an der fertigen Flasche durch entsprechende Bestrahlung, zum Beispiel UV-Bestrahlung, sichtbar gemacht wird.

Entsprechendes kann auch für die Haftvermittlerschichten 17 und 20 gelten. Eine ausreichende mechanische Festigkeit der Behälter setzt auch voraus, daß an sämtlichen Stellen, an welchen sich die Sperrschicht 18 befindet, auch die Haftvermittlerschichten 17, 20 in ausreichender Stärke vorhanden sind, da im anderen Fall eine Verbindung zwischen der äußeren Schicht 22 einerseits und den beiden inneren Schichten 14, 16 andererseits nicht gewährleistet wäre.

Zur Vermeidung von Mißverständnissen sei darauf hingewiesen, daß die Darstellung der Figur 2 die Dicke der Schichten nicht maßstabsgerecht wiedergibt. Die Schichten 17, 18 und 20 werden in der Praxis ganz erheblich dünner sein als dies der Darstellung der Fig. 2 entspricht.

Falls, abweichend von der Darstellung gemäß Fig. 2, die Sperrschicht innen angeordnet ist, also die Position der Schicht 14 in Fig.2 einnimmt, ist es möglich, dem diese Schicht bildenden Material eine Substanz beizufügen, die in der bereits beschriebenen Weise bei der Reaktion mit einer anderen Substanz zum Beispiel eine Veränderung der Farbe der Schicht bewirkt, um so erkennbar zu machen, ob die Schicht überall und in ausreichender Stärke vorhanden ist.

Selbstverständlich ist es auch möglich, das Vorhandensein der Tragschichten in der vorbeschriebenen Weise zu überprüfen. Im allgemeinen wird dies jedoch nicht erforderlich sein, da die Tragschicht(en) von vornherein eine Stärke aufweist beziehungsweise aufweisen, die die Gefahr des Auftretens von fehlerhaften Bereichen, beispielsweise durch Fehlen dieser Schicht in diesen Bereichen, ausschließt.

Das vorstehend im Zusammenhang mit der in den Fig. 1 und 2 dargestellten Flasche Gesagte gilt auch für eine Folie, also ein flächiges Erzeugnis. Diese könnte beispielsweise analog der in Fig. 2 der Zeichnung im Schnitt dargestellten Flaschenwandung aufgebaut sein, wobei in jedem Fall gilt, daß die Wandung bzw. Folie auch einen anderen Aufbau und eine andere Anzahl von Schichten aufweisen kann. Der wesentliche Unterschied zwischen Folien einerseits und Hohlkörpern andererseits wird darin bestehen, daß die Prüfung in unterschiedlicher Weise ablaufen wird. Bei Folien handelt es sich um flächige Erzeugnisse, die im allgemeinen eine große Längserstreckung bei einer wesentlich geringeren Breite aufweisen, also bahnförmig ausgebildet sind. Dabei bietet es sich an, dieses bahnförmige Material kontinuierlich durch eine Prüfeinrichtung hindurchlaufen zu lassen, bei welcher die unter der Einwirkung entsprechender Strahlen stehende Folie an Aufnahmegeräten vorbeiläuft, die irgendwelche Fehler feststellen und in geeigneter Weise auf diese aufmerksam machen. Eine derartige. Verfahrensweise wird auch bei Schlauchfolien anwendbar sein. Flaschen oder andere Behälter werden hingegen einzeln geprüft werden müssen, was ein kontinuierliches Hindurchlaufen einer Flaschenreihe durch eine Kontrolleinrichtung nicht ausschließt. Es kann jedoch, ggf. in Abhängigkeit von der Form des Hohlkörpers, notwendig sein, diesen in der Kontrolleinrichtung zu rotieren oder sonstwie zu bewegen, um so alle Bereiche des Hohlkörpers in den Bereich der jeweiligen Strahlen und auch des Aufnahmegerätes zu bringen.

In jedem Fall bewirkt die Erfindung eine wesentliche Verbesserung des jetzigen Zustandes, zumal die zu ihrer Verwirklichung notwendigen Aufwendungen nicht sehr stark ins Gewicht fallen. Da die zu überprüfenden Schichten des Laminats ganz überwiegend im Inneren desselben sich befinden, kommen die zugesetzten Leuchtpigmente mit dem zu verpackenden Gut nicht in Berührung, falls dieser Aspekt überhaupt eine Rolle spielen sollte. Aus der Vielzahl der heute im Handel befindlichen Leuchtpigmente können aber auch ohne weiteres solche ausgewählt werden, die selbst dann unbedenklich sind, wenn es sich bei dem zu verpackenden Gut um Lebensmittel handelt.

## Patentansprüche

1. Verfahren zum Herstellen von Laminaten aus zumindest überwiegend thermoplastischem Kunststoff mit einer mehrschichtigen Wandung im Koextrusionsverfahren, bei welchem zunächst die die Schichten des fertigen Laminats bildenden Materialien in wenigstens zwei Extrudern plastifiziert und dann in einen gemeinsamen Spritzkopf geführt und dort miteinander verbunden werden und aus dem Spritzkopf das Laminat extrudiert wird und dem Material, aus welchem wenigstens eine Schicht des Laminats gebildet wird, eine Substanz beigefügt wird, die die diese Substanz enthaltende Schicht in der Wandung des Hohlkörpers bei Einwirkung entsprechender Strahlung sichtbar macht, dadurch gekennzeichnet, daß das Laminat in Gestalt von vorzugsweise schlauchförmigen Vorformlingen mit mehrschichtiger Wandung extrudiert wird, aus denen in einem weiteren Verarbeitungsschritt in einer Hohlform unter Einwirkung eines inneren Überdrucks Hohlkörper mit mehrschichtiger Wandung aufgeweitet werden.

2. Verfahren nach Anspruch 1, dadurch gekennzeichnet, daß dem die Schicht bildenden Material eine fluoreszierende oder lumineszierende oder phosphoreszierende Substanz beigefügt wird.

3. Verfahren nach Anspruch 1, dadurch gekennzeichnet, daß den jeweiligen Materialien zur Bildung wenigstens zweier Schichten zur Herstellung des Laminats und des daraus herzustellenden Endproduktes jeweils eine fluoreszierende, lumineszierende bzw. phosphoreszierende Substanz zugemischt wird und beide Substanzen sich unter der Einwirkung von entsprechenden Strahlen unterschiedlich verhalten, z. B. unterschiedlich verfärben.

4. Verfahren zum Feststellen der Beschaffenheit wenigstens einer Schicht in der mehrschichtigen Wandung eines im Koextrusions-Blasverfahren hergestellten Hohlkörpers, der ganz oder überwiegend aus thermoplastischem Material besteht, dadurch gekennzeichnet, daß dem Material wenigstens einer Schicht zu Prüfzwecken eine fluoreszierende und/oder lumineszierende und/oder phosphoreszierende Substanz hinzugefügt wird, die es ermöglicht, diese Schicht in der mehrschichtigem Wandung unter der Einwirkung von Strahlen zu überprüfen.

## Claims

1. A method of manufacturing laminates comprising at least predominantly thermoplastic material having a multi-layer wall by a co-extrusion process, wherein firstly the materials forming the layers of the finished laminate are plasticised in at least two extruders and then passed into a common injection head and are there combined together and the laminate is extruded from the injection head, and added to the material from which at least one layer of the laminate is formed is a substance which makes the layer containing that substance in the wall of the hollow body visible under the action of suitable radiation, characterised in that the laminate is extruded in the form of preferably tubular preforms with a multi-layer wall, from which hollow bodies with a multi-layer wall are expanded in a further processing step in a hollow mould under the effect of an increased internal pressure.

2. A method according to claim 1 characterised in that a fluorescing or luminescing or phosphorescing substance is added to the material forming the layer.

3. A method according to claim 1 characterised in that a fluorescing, luminescing or phosphorescing substance is added to the respective materials for forming at least two layers for the production of the laminate and the end product to be produced therefrom, and the two substances behave differently, for example change colour differently, under the effect of appropriate rays.

4. A method of detecting the nature of at least one layer in the multi-layer wall of a hollow body which is produced by a co-extrusion blow moulding method and which entirely or predominantly comprises thermoplastic material, characterised in that added to the material of at least one layer for test purposes is a fluorescing and/or luminescing and/or phosphorescing substance which makes it possible to examine that layer in the multi-layer wall under the action of rays.

## Revendications

1. Procédé pour réaliser des produits stratifiés, constitués de matière thermoplastique au moins en majorité, et comportant une paroi formée de plusieurs couches, en opérant par coextrusion, ce procédé consistant à assurer d'abord la plastification des matières constitutives des couches du produit stratifié final en les traitant dans au moins deux extrudeuses, pour envoyer ensuite ces matières plastifiées dans une tête d'extrusion commune où elles sont réunies, après quoi on extrude la matière stratifiée en la refoulant hors de la tête d'extrusion, une substance spéciale ayant en outre été ajoutée dans la matière d'au moins une couche élémentaire de l'ensemble stratifié en vue de rendre visible la couche concernée dans la paroi stratifiée d'un corps creux sous l'effet d'un traitement d'irradiation approprié, procédé caractérisé en ce qu'on extrude la matière stratifiée sous forme d'ébauches à mouler, ayant de préférence une configuration tubulaire et comportant une paroi formée de plusieurs couches, pour traiter alors ces ébauches par expansion dans une phase de façonnage suivante, en les soumettant à une surpression interne dans un moule creux, afin de réaliser des corps creux à paroi strastifiée.

2. Procédé selon la revendication 1, caractérisé en ce que l'additif utilisé pour la couche à traiter est une substance fluorescente, ou luminescente, ou phosphorescente.

3. Procédé selon la revendication 1, caractérisé en ce qu'on traite au moyen d'un additif les matières constitutives d'au moins deux couches élémentaires de la matière composite stratifiée et du produit final fabriqué avec cette matière stratifiée, l'additif utilisé pour la matière de chaque couche élémentaire étant une substance fluorescente, luminescente ou phosphorescente, et les deux substances ainsi utilisées réagissant différemment au traitement d'irradiation approprié, par exemple pour prendre des teintes différentes.

4. Procédé pour contrôler la texture d'au moins une couche élémentaire de la paroi multicouche d'un corps creux obtenu par extrusion-soufflage et constitué en totalité ou en majorité de matière thermoplastique, caractérisé en ce qu'on ajoute à la matière constitutive d'au moins une couche à contrôler une substance fluorescente et/ou luminescente et/ou phosphorescente, cette substance permettant de contrôler la couche ainsi préparée dans la paroi multicouche, sous l'effet d'un traitement d'irradiation.
